# FASCICULE DE BREVET EUROPEEN

(11) **EP 0 879 509 B1**
(45) Date de publication et mention de la délivrance du brevet: **11.04.2001**
(21) Numéro de dépôt: 97902428.8
(22) Date de dépôt: 03.02.1997
(51) Int. Cl.: H04B 10/24, H04B 10/17

(54) **LIAISON OPTIQUE BIDIRECTIONNELLE ET DISPOSITIF D'AMPLIFICATION POUR CETTE LIAISON**
BIDIREKTIONALE OPTISCHE ÜBERTRAGUNGSVERBINDUNG UND VERSTÄRKUNGSVORRICHTUNG DAFÜR
BIDIRECTIONAL OPTIC LINK AND DEVICE FOR AMPLIFYING SUCH LINK

(30) Priorité: 06.02.1996 FR 9601406
(43) Date de publication de la demande: 25.11.1998
(73) Titulaire: ALCATEL, 75008 Paris (FR)
(72) Inventeur: PERRIER, Philippe, F-78140 Vélizy-Villacoublay (FR); DELAVAUX, Jean-Marc, Wescosville, PA 18106 (US)
(74) Mandataire: Sciaux, Edmond
(86) Numéro de dépôt international: FR9700204
(87) Numéro de publication internationale: WO9729562

(56) Documents cités:
- EP-A- 0 535 590
- EP-A- 0 585 005
- WO-A-95/15625
- IEEE PHOTONICS TECHNOLOGY LETTERS, vol. 5, no. 3, Mars 1993, NEW YORK US, pages 356-358, XP000362943 CHENG ET AL: "622 Mb/s, 144 km transmission using a bidirectional fiber amplifier repeater"
- IEEE PHOTONICS TECHNOLOGY LETTERS, vol. 5, no. 1, Janvier 1993, NEW YORK US, pages 76-79, XP000335405 KANNAN ET AL: "Unrepeatered bidirectional transmission system over a single fiber using optical fiber amplifiers"

## Description

La présente invention concerne les télécommunications optiques. Elle concerne plus spécifiquement le raccordement de deux stations d'un système de télécommunication lorsque ce raccordement doit être bidirectionnel. Chacune de ces stations comporte alors un terminal de réception et un terminal d'émission qui doivent être respectivement raccordés au terminal d'émission et au terminal de réception de l'autre station par une ligne reliant ces deux stations.

Dans une liaison connue assurant un tel raccordement la ligne reliant les deux stations est une ligne double c'est-à-dire qu'elle comporte deux lignes élémentaires établies en parallèle entre les deux stations. Chaque ligne élémentaire est constituée par des sections de fibres optiques raccordées en série. Dans le but de compenser des pertes en ligne chaque terminal comporte un dispositif d'amplification qui inclut, pour chaque ligne, un amplificateur optique qui est typiquement constitué par une fibre de silice dopée à l'erbium et pompée optiquement. De manière générale on désigne ci-après par le mot "amplificateur" un guide de lumière apte à amplifier une onde lumineuse lorsque cette onde lumineuse à amplifier le parcourt en même temps qu'une onde de pompe.

Dans le même but de compensation de pertes des dispositifs d'amplification en ligne peuvent en outre être répartis sur la longueur de la liaison. Ils comportent alors eux aussi chacun un tel amplificateur pour chaque ligne.

Il est connu d'utiliser dans un tel dispositif d'amplification une même pompe ou plusieurs mêmes pompes en commun pour fournir les deux ondes de pompe nécessaires aux deux amplificateurs. Des coupleurs optiques passifs du type à deux groupes de deux branches permettent alors de diriger une fraction de la puissance de cette pompe ou de ces pompes vers chacun de ces amplificateurs sans faire obstacle au raccordement respectif des deux amplificateurs aux deux lignes élémentaires de la liaison.

Un dispositif de ce type est divulgué par le document : IEEE PROTONICS TECHNOLOGY LETTERS, vol. 5, no. 3, Mars 1993, New York US, pages 356-358.

Par ailleurs une-telle liaison doit être résistante c'est-à-dire que sa réalisation doit être notamment telle que le fonctionnement des émetteurs et des récepteurs soit perturbé aussi peu et aussi rarement que possible par des ondes optiques qui ne leur sont pas destinées.

Une telle résistance semble être obtenue à un degré raisonnable dans le cas de la liaison connue précédemment mentionnée.

Une autre caractéristique essentielle d'une telle liaison est la quantité d'informations qu'elle est capable de transmettre par seconde. Une liaison pouvant comporter plusieurs canaux d'information réalisés par multiplexage spectral, temporel ou autre, sur une ou plusieurs lignes, cette quantité est à distinguer du débit d'information de chaque canal. Il se trouve à ce sujet que, dans le cas de certaines liaisons connues qui sont du genre précédemment mentionné et qui sont en service, la quantité maximale d'information qui a été prévue à l'époque de leur établissement et qui peut être transmise apparaît aujourd'hui insuffisante.

Cette quantité pourrait être augmentée soit par augmentation du débit des terminaux de chaque ligne soit par augmentation du nombre des terminaux inclus dans les stations et de celui des lignes reliant ces stations, ce qui dans les deux cas, serait coûteux. Dans le cas d'une augmentation du nombre des terminaux, une partie majoritaire du coût d'une telle augmentation de quantité d'information résulterait de l'établissement des nouvelles lignes.

La présente invention a notamment pour but de permettre d'augmenter à coût modéré la quantité d'information transmissible par une liaison optique à deux lignes déjà installée sans augmentation correspondante du nombre des lignes optiques et sans diminution de la résistance de cette liaison.

Elle a aussi pour but de permettre la réalisation à faible coût d'une liaison optique bidirectionnelle résistante capable de transmettre un débit d'information élevé.

Elle a notamment pour objet un dispositif d'amplification pour une liaison optique bidirectionnelle, cette liaison transmettant une première et une deuxième onde porteuses portant des informations et se propageant dans des guides optiques respectivement dans une première et une deuxième directions mutuellement opposées. Ce dispositif comporte de manière connue :
- un premier amplificateur optique et un deuxième amplificateur optique constitués de guides transmettant respectivement la première et la deuxième ondes porteuses, ces guides étant dopés pour pouvoir amplifier ces ondes lorsqu'ils sont excités par des ondes de pompe,
- au moins une pompe pour fournir sur une voie de pompe une lumière de pompe apte à constituer lesdites ondes de pompe,
- et des moyens de couplage de pompe raccordant ladite voie de pompe aux deux dits amplificateurs pour leur fournir respectivement les deux dites ondes de pompe à partir de ladite lumière de pompe.

Selon l'invention lesdits moyens de couplage de pompe comportent un composant optique appelé ci-après distributeur et présentant deux groupes de deux branches, les deux branches d'un groupe étant respectivement raccordées à une fibre de ligne guidant les deux ondes porteuses et à la voie de pompe, les deux branches de l'autre groupe étant respectivement raccordées aux deux amplificateurs.

Un tel distributeur peut être constitué par un coupleur optique passif deux fois deux de type connu. Un tel coupleur partage la lumière de pompe en deux ondes de pompe de même puissance ou de puissances différentes qui sont respectivement fournies aux deux amplificateurs.

Il pourrait être constitué aussi par un autre type de composant optique, sensible aux longueurs d'onde, introduisant une perte d'insertion plus faible de la puissance de chacune des deux ondes porteuses d'information. Avec une lumière de pompe constituée de deux ondes de pompe de longueurs d'onde différentes ce composant dirigerait alors ces deux ondes de pompe respectivement vers les deux amplificateurs.

A l'aide des figures schématiques ci-jointes, on va décrire plus particulièrement ci-après, à titre d'exemple non limitatif, comment la présente invention peut être mise en oeuvre. Lorsqu'un même élément est représenté sur plusieurs figures il y est désigné par un même signe de référence.

La figure 1 représente une vue d'ensemble d'une liaison optique selon la présente invention.

La figure 2 représente une vue d'une station d'extrémité de la liaison de la figure 1.

La figure 3 représente une vue d'un dispositif d'amplification en ligne inclus dans la liaison de la figure 1.

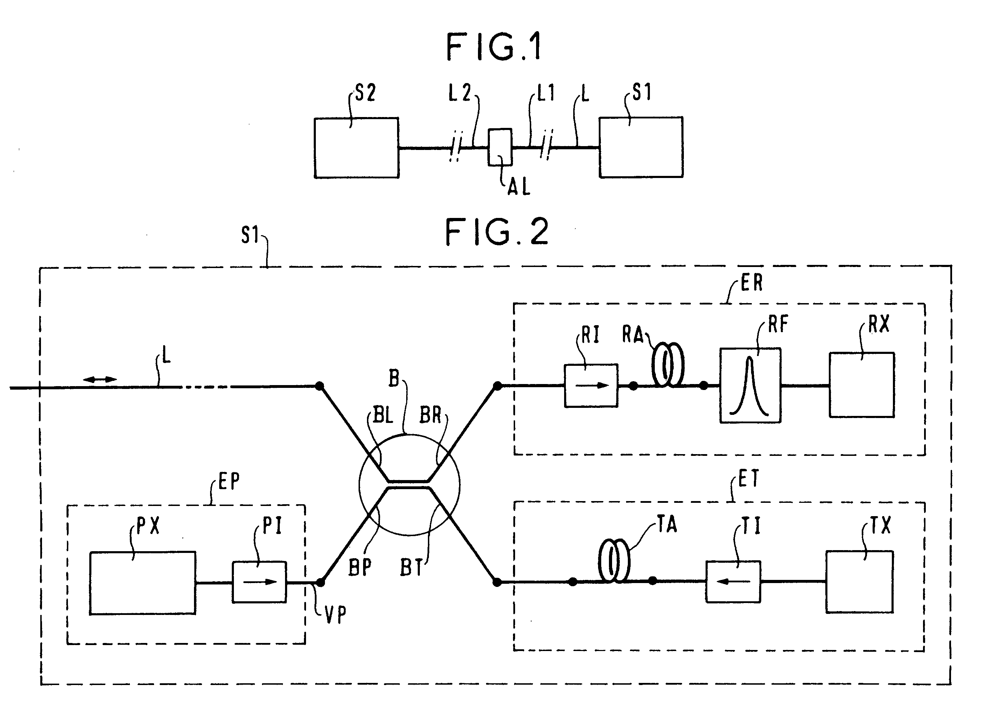

De manière connue et conformément à la figure 1 une liaison optique bidirectionnelle comporte une première et une deuxième stations S1 et S2 situées à distance l'une de l'autre. Une ligne L relie ces deux stations. Elle est constituée par une fibre optique qui est typiquement à base de silice. Chacune des deux stations comporte des éléments optiques qui sont chacun homologue d'un élément de même nom et de même fonction appartenant à l'autre station. Conformément à la figure 2 ces éléments sont les suivants dans le cas de la première station :
- Un amplificateur optique de réception tel qu'un préamplificateur à fibre optique dopée RA recevant un signal de réception de nature optique transmis à cette station sur la ligne L. Cet amplificateur est pompé optiquement par une onde de pompe de réception de manière à amplifier ce signal de réception.
- Un récepteur RX comportant un photodétecteur tel qu'une diode semiconductrice pour recevoir ce signal de réception amplifié et pour fournir en réponse une information de réception qui était portée par ce signal. L'amplificateur de réception et ce récepteur sont inclus dans un terminal de réception ER.
- Un émetteur TX comprenant une source optique telle qu'un laser semiconducteur recevant une information d'émission à transmettre et fournissant en réponse un signal d'émission de nature optique portant ce signal.
- Un amplificateur optique d'émission tel qu'un postamplificateur à fibre optique dopée TA recevant ce signal d'émission. Cet amplificateur est pompé optiquement par une onde de pompe d'émission de manière à fournir un signal d'émission amplifié. L'émetteur et l'amplificateur d'émission sont inclus dans un terminal d'émission ET.
- Un ensemble de pompe EP fournissant les ondes de pompe de réception et d'émission.
- Des moyens de couplage recevant les ondes de pompe de réception et d'émission et transmettant ces ondes aux amplificateurs optiques de réception et d'émission, respectivement.
- Des moyens de couplage recevant le signal de réception à partir de la ligne L et transmettant ce signal à l'amplificateur de réception RA.
- Enfin des moyens de couplage recevant le signal d'émission à partir de l'ensemble d'émission ET et transmettant ce signal à la ligne L.

Selon la présente invention la ligne L est une ligne simple qui guide le signal d'émission amplifié et le signal de réception de la première station dans une même fibre optique, ceci au moins au voisinage de cette première station. Cette fibre constitue une fibre de ligne. Dans une mise en oeuvre typique de cette invention la ligne L est simple sur toute sa longueur.

Les moyens de couplage de cette première station comportent alors un distributeur B constitué par un coupleur passif deux fois deux ayant deux groupes de branches comportant chacun deux branches. Tout signal reçu sur l'une quelconque de ces deux branches de l'un quelconque de ces deux groupes est transmis par ce coupleur, par exemple à 50 % de la puissance de ce signal, à chacune des deux branches de l'autre de ces deux groupes.

Un premier groupe de branches comporte une branche de ligne BL raccordée à la fibre de ligne L et une branche de pompe BP raccordée à l'ensemble de pompe EP. Le deuxième groupe de branches comporte une branche de réception BR raccordée à l'amplificateur optique de réception RA et une branche d'émission BT raccordée à l'amplificateur optique d'émission TA.

Les amplificateurs optiques de réception et d'émission RA et TA, l'ensemble de pompe EP et le coupleur B constituent ensemble un dispositif d'amplification de station.

Le récepteur RX est sensible à des ondes dont la longueur d'onde constitue à la fois la longueur d'onde de réception λR de la première station et la longueur d'onde d'émission de la deuxième station. L'émetteur TX émet à une longueur d'onde qui constitue à la fois la longueur d'onde d'émission λT de la première station et la longueur d'onde de réception de la deuxième station et qui est différente de la longueur d'onde de réception de cette première station. Ces longueurs d'onde sont par exemple λR = 1 550 nm et λT=1 554 nm. Les ondes de pompe ont une longueur d'onde de pompe λP= 1 480 ou 980 nm. Il doit être cependant compris que les longueurs d'onde de réception et d'émission peuvent être différentes de celles qui viennent d'être indiquées et être alors soit très proches l'une de l'autre, par exemple 1545 et 1546 nm, sont plus éloignées, par exemple l'une dans l'intervalle 1520-1540 nm, l'autre dans l'intervalle 1540-1560 nm, soit très éloignées par exemple voisines de 1300 et de 1500 nm.

Les amplificateurs et les longueurs d'ondes de pompe sont bien entendu adaptées aux longueurs d'onde de réception et d'émission.

De préférence le terminal de réception ER comporte un moyen de filtrage optique tel qu'un filtre RF ou un démultiplexeur spectral raccordé entre l'amplificateur optique de réception RA et le récepteur RX pour empêcher l'onde de pompe de réception d'atteindre ce récepteur et de réduire la quantité d'une lumière amplifiée par cet amplificateur, notamment l'émission spontanée amplifiée vue par le récepteur RX tout en transmettant le signal de réception amplifié à ce récepteur. Il comporte en outre un isolateur optique RI raccordé entre le coupleur de partage de pompe B et l'amplificateur optique de réception RA pour empêcher une lumière amplifiée par cet amplificateur, notamment l'émission spontanée amplifiée, de se diriger vers ce coupleur.

Le terminal d'émission ET comporte en outre un moyen d'isolation d'émission tel qu'un isolateur optique TI ou un filtre raccordé entre l'émetteur TX et l'amplificateur d'émission TA pour empêcher l'onde de pompe d'émission ainsi qu'une lumière amplifiée par cet amplificateur, notamment l'émission spontanée amplifiée, d'atteindre l'émetteur.

L'ensemble de pompe EP comporte au moins une pompe PX telle qu'une diode laser et un moyen d'isolation de pompe tel qu'un isolateur optique PI ou un filtre raccordé entre le coupleur de partage de pompe B et la pompe PX pour empêcher le signal d'émission amplifié et le signal d'émission spontanée amplifiée d'atteindre la pompe.

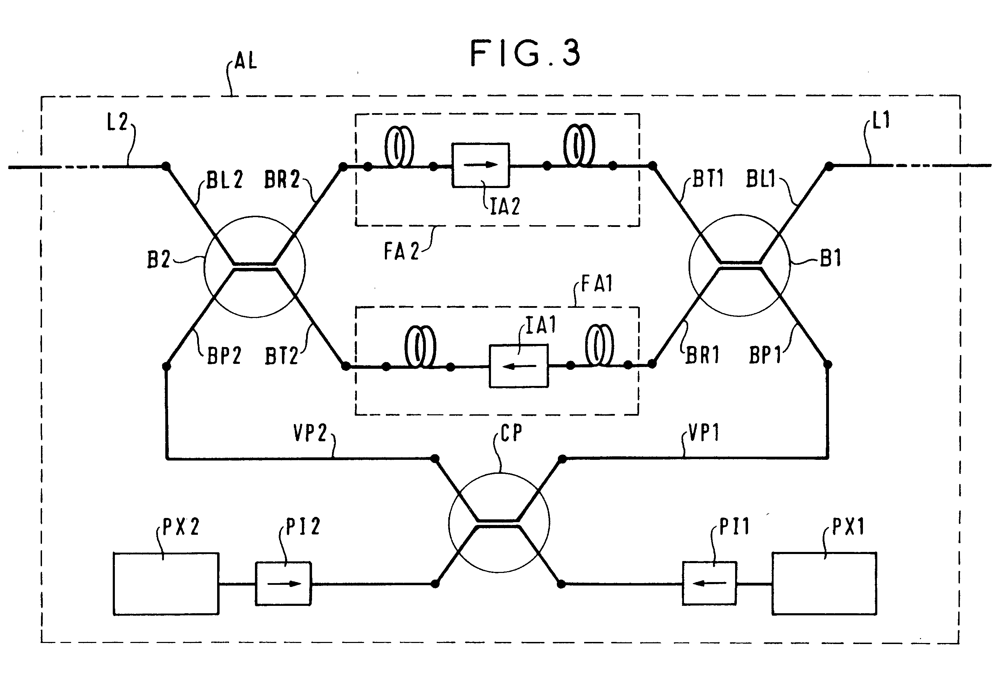

Sur les figures 2 et 3 des soudures réalisant les raccordements entre fibres successives ont été représentées par des surépaisseurs du trait représentant ces fibres. Ces raccordements pourraient cependant être réalisés par tout autre moyen connu.

La liaison optique bidirectionnelle décrite ci-dessus présente une résistance comparable à celle des liaison connues, notamment vis-à-vis de trois risques qui sont indiqués ci-après dans l'hypothèse où les seuls dispositifs d'amplification inclus dans cette liaison sont les dispositifs d'amplification de station tels que décrits ci-dessus.

Un premier risque est lié aux faits suivants :

Le signal d'émission amplifié présente une forte puissance au voisinage de la station qui l'émet (par exemple la première station). -La rétrodiffusion Rayleigh dans la fibre de ligne L est donc importante. La lumière ainsi rétrodiffusée est partiellement dirigée par le coupleur B vers l'ensemble récepteur ER et pourrait donc empêcher celui-ci de détecter correctement le signal de réception. Mais il a été trouvé dans le cadre de la présente invention qu'il était facile de donner aux longueurs d'onde de réception λR et d'émission λT des valeurs suffisamment différentes pour éviter cet inconvénient, par exemple avec l'aide du filtre RF, sans que ces longueurs d'onde sortent du domaine spectral convenablement transmis par une ligne L d'un type usuel ni du domaine spectral convenablement amplifié par les amplificateurs optiques du type usuel. De telles valeurs ont été indiquées ci-dessus.

Un deuxième risque est lié aux faits suivants : Une partie de la puissance de sortie de l'amplificateur d'émission TA est renvoyée vers cet amplificateur par rétrodiffusion Rayleigh dans la fibre de ligne L et peut donc être réamplifiée en même temps que le signal fourni par l'émetteur TX et altérer ainsi le signal fourni par cet amplificateur. Il a été cependant trouvé, dans le cadre de la présente invention, que la saturation normalement réalisée du gain d'un tel amplificateur de puissance était telle que cette altération reste négligeable.

Un troisième risque est lié aux faits suivants :

Une fraction de la puissance du signal de réception est dirigée par le coupleur B vers l'amplificateur optique d'émission TA. Elle est donc amplifiée par ce dernier et pourrait contribuer de manière variable à la saturation du gain de cet amplificateur. Il en résulterait que le signal d'émission subirait dans cet amplificateur une amplification variable c'est-à-dire que le signal d'émission amplifié porterait une modulation parasite. Mais, dans le cadre de la présente invention, il a été trouvé que la puissance du signal de réception reçue par l'amplificateur optique d'émission était dans un cas typique d'un niveau suffisamment bas et dans tous les cas, beaucoup plus bas que le signal d'émission émis par TX pour que cet inconvénient potentiel soit négligeable. Le niveau de la modulation parasite en question est typiquement voisin de 0,5 dB dans le cas d'une puissance reçue de -30 dBm.

Un quatrième risque est lié aux faits suivants :

La fibre de ligne peut se casser entre le coupleur de partage de pompe et l'amplificateur optique d'émission de la deuxième station entraînant alors une réflexion de la lumière. L'amplificateur optique d'émission TA de la première station reçoit alors son propre signal qui a été réfléchi par la cassure et qui a été retardé par sa propagation aller et retour dans la ligne L.

Ce signal retardé pourrait perturber le fonctionnement de cet amplificateur.

Dans le cadre de la présente invention il a cependant été trouvé que, dans le cas de la liaison typique indiquée ci-dessus et dans des liaisons analogues, le niveau de ce signal réfléchi et retardé reçu par l'amplificateur optique TA était suffisamment bas pour ne pas avoir d'effet gênant.

De manière plus générale il a été trouvé que la présente invention permettait un doublement de la quantité d'information transmise par une ligne sans entraîner en pratique les risques supplémentaires qui pouvaient être redoutés.

Dans la mesure où la longueur d'une liaison du genre ci-dessus le justifie, une telle liaison comporte en outre avantageusement un dispositif d'amplification en ligne ou une succession de tels dispositifs répartis sur la longueur de la ligne. Un tel dispositif AL va maintenant être décrit. Il est inséré entre un premier et un deuxième tronçons successifs L1 et L2 appartenant à la fibre de ligne L et situés des côtés des première et deuxième stations S1 et S2, respectivement. Il comporte les éléments suivants :
- un premier et un deuxième amplificateurs optiques FA1 et FA2 aptes à recevoir une première et une deuxième onde de pompe et à recevoir et à amplifier alors les ondes présentant lesdites première et deuxième longueurs d'onde respectivement,
- au moins une pompe PX1 pour fournir sur une première et une deuxième voies de pompe VP1 et VP2 une lumière de pompe apte à constituer ces ondes de pompe,
- et un premier et un deuxième distributeurs constitués par des coupleurs B1 et B2 dudit type passif deux fois deux. Les branches de ligne BL1 et BL2 de ces deux coupleurs sont raccordées aux premier et deuxième tronçons de ligne L1 et L2, leurs branches de pompe BP1 et BP2 sont raccordées aux première et deuxième voies de pompe VP1 et VP2, leurs branches de réception BR1 et BR2 sont raccordées aux premier et deuxième amplificateurs FA1 et FA2, et leurs branches d'émission BT1 et BT2 sont raccordées aux deuxième et premier amplificateurs FA2 et FA1, respectivement. De préférence chaque tel amplificateur tel que FA1 comporte deux fibres amplificatrices telles que FD1 et FD2 de part et d'autre de l'isolateur tel que IA1, ce qui permet à la fois d'assurer un pompage plus efficace parce que l'amplification de l'émission spontanée contradirectionnelle.

De préférence un premier et un deuxième isolateurs optiques d'amplification IA1 et IA2 sont inclus dans les premier et deuxième amplificateurs FA1 et FA2 pour transmettre sélectivement les ondes lumineuses se propageant à partir des premier et deuxième coupleurs, respectivement. De préférence chaque tel amplificateur tel que FA1 comporte deux fibres amplificatrices telles que FD1 et FD2 de part et d'autre de l'isolateur tel que IA1, ce qui permet à la fois d'assurer un pompage plus efficace parce que bidirectionnel et de limiter l'amplification de l'émission spontanée contradirectionnelle.

De préférence encore le dispositif d'amplification en ligne AL comporte une première et une deuxième pompes PX1 et PX2 munies d'un premier et d'un deuxième isolateurs optiques de protection de pompe PI1 et PI2, respectivement. Ces deux pompes alimentent chacune les deux voies de pompe VP1 et VP2 par l'intermédiaire d'un même coupleur de mélange de pompe CP de manière à rendre ce dispositif résistant à la défaillance d'une de ces deux pompes.

La longueur de ligne L comprise entre deux dispositifs d'amplification successifs est typiquement de l'ordre de 40 km ou plus, ces dispositifs étant localisés soit en station, soit en ligne.

Quoique la descripion ci-dessus ait mentioné une seule onde porteuse d'information transmise dans chaque direction, il doit être compris que la présente invention s'applique tout aussi bien dans le cas où plusieurs telles ondes, par exemple de longueurs d'onde différentes, sont transmises dans chaque direction.

## Revendications

1. Dispositif d'amplification pour liaison optique bidirectionnelle, cette liaison transmettant au moins une première et au moins une deuxième onde porteuse portant des informations et se propageant dans un guide optique respectivement dans une première et une deuxième directions mutuellement opposées, ce dispositif comportant :
- un premier (RA) et un deuxième (TA) amplificateurs optiques constitués de guides transmettant respectivement la première et la deuxième ondes porteuses, ces guides étant dopés pour pouvoir amplifier ces ondes lorsqu'ils sont excités par des ondes de pompe,
- au moins une pompe (PX) pour fournir sur une voie de pompe (VP) une lumière de pompe apte à constituer lesdites ondes de pompe,
- et des moyens de couplage de pompe raccordant ladite voie de pompe aux deux dits amplificateurs optiques pour leur fournir respectivement les deux dites ondes de pompe à partir de ladite lumière de pompe,
ce dispositif étant caractérisé par le fait que lesdits moyens de couplage de pompe comportent un distributeur (B) possédant quatre branches constituant :
- une branche de ligne (BL) raccordée à une fibre de ligne (L) guidant les deux dites ondes porteuses.
- - une branche de pompe (BP) raccordée à ladite voie de pompe (VP), et
- une première et une deuxième branches d'amplification (BR et BT) respectivement raccordées aux dits premier et deuxième amplificateurs optiques (RA et TA),
ce distributeur étant apte :
- à transmettre ladite lumière de pompe à partir de la dite branche de pompe partiellement vers chacune de ses deux dites première et deuxième branches d'amplification,
- à transmettre ladite première onde porteuse à partir de sa dite branche de ligne au moins partiellement à sa dite première branche d'amplification,
- et à transmettre ladite deuxième onde porteuse à partir de sa dite deuxième branche d'amplification au moins partiellement à sa dite branche de ligne.

2. Dispositif selon la revendication 1, ledit distributeur étant constitué par un coupleur optique passif deux fois deux.

3. Système de liaison optique bidirectionnelle comportant une première et une deuxième stations (S1 et S2) situées à distance l'une de l'autre et reliées l'une à l'autre par une ligne (L) à fibre optique, chacune de ces deux stations comportant des éléments optiques d'émission et de réception qui sont les suivants au moins dans le cas de ladite première station (S1) :
- un amplificateur optique de réception (RA) recevant un signal de réception de nature optique portant une information de réception et transporté à cette station par la ligne (L), cet amplificateur étant pompé optiquement par une onde de pompe de réception de manière à amplifier ce signal de réception,
- un récepteur (RX) pour recevoir ce signal de réception amplifié et pour fournir en réponse l'information de réception qui était portée par ce signal, l'amplificateur optique de réception et ce récepteur étant inclus dans un terminal de réception (ER),
- un émetteur (TX) recevant une information d'émission à transmettre et fournissant en réponse un signal d'émission de nature optique portant cette information, et
- un amplificateur optique d'émission (TA) recevant ce signal d'émission, cet amplificateur étant pompé optiquement par une onde de pompe d'émission de manière à fournir un signal d'émission amplifié, l'émetteur et l'amplificateur d'émission étant inclus dans un terminal d'émission (ET),
ce système de liaison comportant pour cette station:
- un ensemble de pompe (EP) fournissant une lumière de pompe apte à constituer lesdites ondes de pompe de réception et d'émission, et
- un ensemble de couplage, cet ensemble de couplage constituant :
- des moyens de couplage recevant la lumière de pompe et dirigeant cette lumière vers les amplificateurs optiques de réception et d'émission, les amplificateurs optiques de réception (RA) et d'émission (TA) et l'ensemble de pompe (EP) constituant avec ces moyens de couplage un dispositif d'amplification de station,
- des moyens de couplage recevant le signal de réception à partir de la ligne (L) et transmettant ce signal à l'amplificateur de réception,
- et des moyens de couplage recevant le signal d'émission à partir de l'ensemble d'émission et transmettant ce signal à la ligne (L),
ce système de liaison étant caractérisé par le fait que la ligne (L) guide le signal d'émission amplifiée et le signal de réception de la première station dans une même fibre optique, cette fibre constituant une fibre de ligne (L),
ledit ensemble de couplage pour cette première station comportant un distributeur (B) à deux groupes de deux branches, les deux branches d'un groupe (BL et BP) étant respectivement raccordées à une fibre de ligne (L) guidant les deux ondes porteuses et à la voie de pompe (VP), les deux branches de l'autre groupe (BR et BT) étant respectivement raccordées aux deux dits amplificateurs optiques (RA) et (TA) pour coupler la fibre de ligne et la voie de pompe à ces deux amplificateurs, ledit récepteur (RX) de la première station étant sensible à des ondes présentant une première longueur d'onde constituant à la fois la longueur d'onde de réception (lR) de la première station et une longueur d'onde d'émission de la deuxième station, l'émetteur (TX) de la première station émettant à une deuxième longueur d'onde (lT) qui constitue à la fois la longueur d'onde d'émission de la première station et la longueur d'onde de réception de la deuxième station et qui est différente de la première longueur d'onde.

4. Système de liaison selon la revendication 3, ledit distributeur (B) étant constitué par un coupleur optique passif deux fois deux ayant deux groupes de branches comportant chacun deux branches et tel que tout signal reçu sur l'une quelconque de ces deux branches de l'un quelconque de ces deux groupes soit transmis en partie par ce coupleur à chacune des deux branches de l'autre de ces deux groupes,
un groupe de branches comportant une branche de ligne (BL) raccordée à la fibre de ligne (L) et une branche de pompe (BP) raccordée à l'ensemble de pompe (EP), l'autre groupe de branches comportant une branche de réception (BR) raccordée à l'amplificateur optique de réception (RA) et une branche d'émission (BT) raccordée à l'amplificateur optique d'émission (TA).

5. Système de liaison selon la revendication 3, caractérisé par le fait que le terminal de réception (ER) comporte un moyen de filtrage (RF) raccordé entre l'amplificateur optique de réception (RA) et le récepteur (RX) et transmettant sélectivement le signal de réception amplifié à ce récepteur.

6. Système de liaison selon la revendication 3, caractérisé par le fait que le terminal de réception (ER) comporte en outre un isolateur optique (RI) raccordé entre l'élément de partage de pompe (B) et l'amplificateur optique de réception (RA) pour empêcher une lumière amplifiée par cet amplificateur de se diriger vers ce coupleur.

7. Système de liaison selon la revendication 3, caractérisé par le fait que le terminal d'émission (ET) comporte en outre un moyen d'isolation d'émission (TI) raccordé entre l'émetteur (TX) et l'amplificateur optique d'émission (TA) pour empêcher des ondes lumineuses d'atteindre l'émetteur.

8. Système de liaison selon la revendication 3, caractérisé par le fait que l'ensemble de pompe (EP) comporte au moins une pompe (PX) et un moyen d'isolation de pompe (PI) raccordé entre l'élément de partage de pompe (B) et chaque pompe (PX) pour empêcher le signal d'émission amplifié d'atteindre cette pompe.

9. Système de liaison optique bidirectionnelle comportant une première et une deuxième stations (S1, S2) reliées l'une à l'autre par une fibre de ligne (L) pour transmettre une première et une deuxième ondes porteuses portant des informations et se propageant dans ladite fibre de ligne respectivement dans une première direction et dans une deuxième direction opposée à cette première direction, ce système de liaison comportant en outre au moins un dispositif d'amplification en ligne (AL) inséré entre un premier et un deuxième tronçons successifs (L1 et L2) appartenant à ladite fibre de ligne (L) et situés des côtés desdites première et deuxième stations (S1 et S2), respectivement, ce dispositif comportant :
- un premier et un deuxième amplificateurs optiques (FA1 et FA2) aptes à recevoir une première et une deuxième ondes de pompe et à recevoir et à amplifier alors les ondes, au moins, lesdites première et deuxième ondes porteuses, respectivement, et
- un ensemble de pompe (PX1) pour fournir sur une première et une deuxième voies de pompe (VP1 et VP2) une lumière de pompe apte à constituer lesdites ondes de pompe,
- ledit système de liaison étant caractérisé par le fait que ledit dispositif d'amplification comporte un premier et un deuxième distributeurs (B1, B2) à deux groupes de deux branches avec couplage des branches de chaque dit groupe de branches de chaque distributeur aux branches de l'autre dit groupe de branches de ce distributeur, un groupe de branches de chaque distributeur étant constitué par une branche de ligne et une branche de pompe, l'autre groupe de branches de chaque distributeur étant constitué par une branche de réception et une branche d'émission, lesdites branches de ligne (BL1 et BL2) de ces deux distributeurs étant raccordées auxdits premier et deuxième tronçons de ligne (L1 et L2), lesdites branches de pompe (BP1 et BP2) de ces deux distributeurs étant raccordées auxdites première et deuxième voies de pompe (VP1 et VP2), lesdites branches de réception (BR1 et BR2) de ces deux distributeurs étant raccordées auxdits premier et deuxième amplificateurs optiques (FA1 et FA2), lesdites branches d'émission (BT1 et BT2) de ces deux distributeurs étant raccordées auxdits deuxième et premier amplificateurs optiques (FA2 et FA1), respectivement.

10. Système de liaison selon la revendication 9, caractérisé par le fait que ledit ensemble de pompe comporte une première et une deuxième pompes (PX1 et PX2) munies d'un premier et d'un deuxième isolateurs optiques de protection de pompe (PI1 et PI2), respectivement, et alimentant chacune les deux dites voies de pompe (VP1 et VP2) par l'intermédiaire d'un même coupleur de mélange de pompe (CP) de manière à rendre ce dispositif résistant à la défaillance d'une de ces deux pompes.

## Claims

1. Amplifier apparatus for a both-way optical link, said link conveying at least one first and at least one second carrier wave carrying information and propagating in respective mutually opposite first and second directions in a light guide, the apparatus comprising:
· first and second optical amplifiers (RA, TA) each constituted by a light guide respectively conveying the first and second carrier waves, said light guides being doped to be capable of amplifying said waves when excited by pumping waves;
· at least one pump (PX) for providing, on a pump path (VP), pumping light suitable for constituting said pumping waves; and
· pump coupling means connecting said pump path to both of said optical amplifiers to provide them respectively with said two pumping waves from said pumping light;
the apparatus being characterized by the fact that said pump coupling means include a distributor (B) possessing four branches, constituting:
· a line branch (BL) connected to a line fiber (L) guiding said two carrier waves;
· a pump branch (BP) connected to said pump path (VP); and
· first and second amplification branches (BR and BT) respectively connected to said first and second optical amplifiers (RA and TA);
said amplifier being suitable:
· for conveying part of said pumping light from said pump branch to each of its said first and second amplification branches;
· for conveying at least a part of said first carrier wave from its said line branch to its said first amplification branch; and
· for conveying at least a portion of said second carrier wave from its said second amplification branch to its said line branch.

2. Apparatus according to claim 1, said distributor being constituted by a two-by-two passive optical coupler.

3. A both-way optical link system comprising first and second stations (S1 and S2) situated apart from each other and connected to each other by an optical fiber line (L), each of said two stations comprising transmit and receive optical elements which are as follows, at least in said first station (S1):
· a receive optical amplifier (RA) receiving an optical receive signal carrying receive information and conveyed to said station over the line (L), said amplifier being optically pumped by a receive pumping wave so as to amplify said receive signal;
· a receiver (RX) for receiving said amplified receive signal and for responding by supplying the received information that is carried by said signal, the receive optical amplifier and the receiver being included in a receive terminal (ER);
· a transmitter (TX) receiving transmit information to be transmitted and responding by delivering an optical transmit signal carrying said information; and
· a transmit optical amplifier (TA) receiving said transmit signal, said amplifier being optically pumped by a transmit pump wave to supply an amplified transmit signal, the transmitter and the transmit amplifier being included in a transmit terminal (ET);
said link system including, for said station:
· a pump assembly (EP) providing pumping light suitable for constituting said receive and transmit pumping waves; and
· a coupling assembly, said coupling assembly constituting:
· coupling means receiving the pumping light and directing said light to the receive and transmit optical amplifiers, the receive and transmit optical amplifier (RA, TA) and the pumping assembly (EP) together with said coupling means constituting station amplification apparatus;
· coupling means receiving the receive signal from the line (L) and conveying said signal to the receive amplifier; and
· coupling means receiving the transmit signal from the transmit assembly and conveying said signal to the line (L);
said link system being characterized by the fact that the line (L) guides the amplified transmit signal and the receive signal from the first station in the same optical fiber, said fiber constituting a line fiber (L);
said coupling assembly for said first station comprising a distributor (B) having two groups of two branches, the two branches of one group (BL and BP) being connected respectively to a line fiber (L) guiding both carrier waves and to the pump path (VP), the two branches of the other group (BR and BT) being connected respectively to said two optical amplifiers (RA and TA) to couple the line fiber and the pump path to said two amplifier, said receiver of the first station being sensitive to waves having a first wavelength constituting both the receive wavelength (λR) of the first station and a transmit wavelength of the second station, the transmitter (TX) of the first station transmitting at a second wavelength (λT) which constitutes both the transmit wavelength of the first station and the receive wavelength of the second station, and which is different from the first wavelength.

4. A link system according to claim 3, said distributor (B) being constituted by a two-by-two passive optical coupler having two groups of branches each comprising two branches, and such that any signal received on either of said two branches of either of said two groups is conveyed in part by said coupler to each of the two branches of the other of the two groups,
one group of branches comprising a line branch (BL) connected to the line fiber (L) and a pump branch (BP) connected to the pump assembly (EP), the other group of branches comprising a receive branch (BR) connected to the receive optical amplifier (RA) and a transmit branch (BT) connected to the transmit optical amplifier (TA).

5. A link system according to claim 3, characterized by the fact that the receive terminal (ER) includes filter means (RF) connected between the receive optical amplifier (RA) and the receiver (RX), and selectively conveying the amplified receive signal to said receiver.

6. A link system according to claim 3, characterized by the fact that the receive terminal (ER) further includes an optical isolator (Rl) connected between the pump sharing elements (B) and the receive optical amplifier (RA) to prevent light amplified by said amplifier from going to said coupler.

7. A link system according to claim 3, characterized by the fact that the transmit terminal (ET) further includes transmit isolation means (Tl) connected between the transmitter (TX) and the transmit optical amplifier (TA) to prevent light waves from reaching the transmitter.

8. A link system according to claim 3, characterized by the fact that the pump assembly (EP) includes at least one pump (PX) and pump isolation means (PI) connected between the pump sharing element (B) and each pump (PX) to prevent the amplified transmit signal reaching the pump.

9. A both-way optical link system including first and second stations (S1, S2) connected to each other by a line fiber (L) to convey first and second carrier waves carrying information and propagating in said line fiber respectively in a first direction and in a second direction opposite to said first direction, said link system further including at least one in-line amplifier apparatus (AL) inserted between first and second successive segments (L1 and L2) belonging to said line fiber (L) and situated respectively on the first station side and on the second station side thereof, said apparatus comprising:
· first and second optical amplifiers (FA1 and FA2) suitable for receiving first and second pumping waves and then for receiving and amplifying at least said first and second carrier waves, respectively; and
· a pumping assembly (PX1) for providing, on first and second pump paths (VP1 and VP2), pumping light suitable for constituting said pumping waves;
· said link system being characterized by the fact that said amplification apparatus comprises first and second distributors (B1, B2) having two groups of two branches with the branches of each of said groups of branches of each distributor being coupled to the branches of the other group of branches of said distributor, one group of branches of each distributor being constituted by a line branch and a pump branch, the other group of branches of each distributor being constituted by a receive branch and a transmit branch, said line branches (BL1 and BL2) of said two distributors being connected to said first and second line segments (L1 and L2), said pump branches (BP1 and BP2) of said two distributors being connected to said first and second pump paths (VP1 and VP2), said receive branches (BR1 and BR2) of said two distributors being connected to said first and second optical amplifiers (FA1 and FA2), and said transmit branches (BT1 and BT2) of said two distributors being connected to said first and second optical amplifiers (FA2 and FA1), respectively.

10. A link system according to claim 9, characterized by the fact that pump assembly comprises first and second pumps (PX1 and PX2) respectively provided with first and second pump-protecting optical isolators (P11 and P12), and each feeding both of said pump paths (VP1 and VP2) via a common pump mixing coupler (CP) so as to make the apparatus robust against failure of one of the two pumps.

## Patentansprüche

1. Verstärkungsvorrichtung für eine bidirektionale optische Verbindung, wobei diese Verbindung eine erste und eine zweite Trägerwelle überträgt, die Informationen tragen und sich in einem Lichtwellenleiter in einer ersten bzw. einer zweiten Richtung ausbreiten, die einander entgegengesetzt sind, welche umfasst:
- einen ersten (RA) und einen zweiten (TA) optischen Verstärker, die aus Leitern bestehen, die die erste bzw. die zweite Trägerwelle übertragen, wobei diese Leiter dotiert sind, um diese Wellen verstärken zu können, wenn sie durch Pumpwellen angeregt werden,
- wenigstens eine Pumpe (PX), um auf einem Pumpkanal (VP) ein Pumplicht bereitzustellen, das fähig ist, die Pumpwellen zu bilden,
- und Pumpenkopplungsmittel, die den Pumpkanal mit den beiden optischen Verstärkern verbinden, um ihnen entsprechend die beiden Pumpwellen ausgehend vom Pumplicht zu liefern,
dadurch gekennzeichnet, dass die Pumpenkopplungsmittel einen Verteiler (B) aufweisen, der vier Zweige besitzt, die bilden:
- einen Leitungszweig (BL), der mit einer Leitungsfaser (L) verbunden ist, die die beiden Trägerwellen leitet,
- einen Pumpenzweig (BP), der mit dem Pumpkanal (VP) verbunden ist, und
- einen ersten und einen zweiten Verstärkungszweig (BR und BT), die mit dem ersten bzw. zweiten optischen Verstärker (RA und TA) verbunden sind,
wobei dieser Verteiler fähig ist:
- das Pumplicht ausgehend vom Pumpenzweig teilweise zu jedem seiner beiden ersten und zweiten Verstärkungszweige hin zu übertragen,
- die erste Trägerwelle ausgehend vom seinem Leitungszweig wanigetena teilweise zu seinem ersten Verstärkungszweig zu übertragen,
- und die zweite Trägerwelle ausgehend vom seinem zweiten Verstärkungszweig wenigstens teilweise zu seinem Leitungszweig zu übertragen.

2. Vorrichtung nach Anspruch 1, wobei der Verteiler aus einem passiven optischen Zwei-mal-Zwei-Koppler besteht.

3. System für eine bidirektionale optische Verbindungssystem, das eine erste und eine zweite Station (S1 und S2) aufweist, die sich in einem Abstand voneinander befinden und durch eine Leitung (L) mit optischer Faser miteinander verbunden sind, wobei jede dieser beiden Stationen optische Sende- und Empfangselemente aufweist, die wenigstens im Fall der ersten Station (S1) die folgenden sind:
- ein optischer Empfangsverstärker (RA), der ein Empfangssignal mit optischer Natur empfängt, das eine Empfangsinformation trägt und über die Leitung (L) zu dieser Station transportiert wird, wobei dieser Verstärker durch eine Empfangspumpwelle optisch gepumpt wird, um dieses Empfangssignal zu verstärken,
- ein Empfänger (RX), um dieses verstärkte Empfangssignal zu empfangen und in Antwort die Empfangsinformation bereitzustellen, die von diesem Signal getragen wurde, wobei der optische Empfangsverstärker und dieser Empfänger in einer Empfangsendeinrichtung (ER) enthalten sind,
- ein Sender (TX), der eine zu übertragende Sendeinformation empfängt und in Antwort ein Sendesignal mit optischer Natur bereitstellt, das diese Information trägt, und
- ein optischer Sendeverstärker (TA), der dieses Sendesignal empfängt, wobei dieser Verstärker durch eine Sendepumpwelle optisch gepumpt wird, um ein verstärktes Sendesignal bereitzustellen, wobei der Sender und der Sendeverstärker in einer Sendeendeinrichtung (ET) enthalten sind,
wobei dieses Verbindungssystem für diese Station aufweist:
- eine Pumpeneinheit (EP), die ein Pumplicht bereitstellt, das fähig ist, die Empfangs- und Sendepumpwellen zu bilden, und
- eine Kopplungseinheit, wobei diese Kopplungseinheit bildet:
- Kopplungsmittel, die das Pumplicht empfangen und diese Licht zu den optischen Empfangs- und Sendeverstärkern hin leiten, wobei die optischen Empfangs- (RA) und Sendeverstärker (TA) und die Pumpeneinheit (EP) mit diesen Kopplungsmitteln eine Verstärkungsvorrichtung der Station bilden,
- Kopplungsmittel, die das Empfangssignal ausgehend von der Leitung (L) empfangen und dieses Signal zum Empfangsverstärker übertragen,
- und Kopplungsmittel, die das Sendesignal ausgehend von der Sendeeinheit empfangen und dieses Signal zur Leitung (L) übertragen,
dadurch gekennzeichnet, dass die Leitung (L) das verstärkte Sendesignal und das Empfangssignal der ersten Station in derselben optischen Faser leitet, wobei diese Faser eine Leitungsfaser (L) bildet,
wobei die Kopplungseinheit für diese erste Station einen Verteiler (B) mit zwei Gruppen mit zwei Zweigen aufweist, wobei die beiden Zweige einer Gruppe (BL und BP) mit einer die beiden Trägerwellen leitenden Leitungsfaser (L) bzw. mit dem Pumpkanal (VP) verbunden sind, wobei die beiden zweige der anderen Gruppe (BR und BT) entsprechend mit den beiden optischen Verstärkern (RA) und (TA) verbunden sind, um die Leitungsfaser und den Pumpkanal an diese beiden Verstärker zu koppeln, wobei der Empfänger (RX) der ersten Station für Wellen empfindlich ist, die eine erste Wellenlänge aufweisen, die gleichzeitig die Empfangswellenlänge (lR) der ersten Station und eine Sendewellenlänge der zweiten Station bildet, wobei der Sender (TX) der ersten Station mit einer zweiten Wellenlänge (lT) sendet, die gleichzeitig die Sendewellenlänge der ersten Station und die Empfangswellenlänge der zweiten Station bildet und die von der ersten Wellenlänge verschieden ist.

4. Verbindungssystem nach Anspruch 3, wobei der Verteiler (B) aus einem passiven optischen Zwei-mal-Zwei-Optokoppler mit zwei Gruppen von Zweigen besteht, die jeweils zwei Zweige aufweisen, und so, dass jedes auf irgendeinem dieser beiden Zweige irgendeiner dieser beiden Gruppen empfangene Signal zum Teil von diesem Koppler zu jedem der beiden Zweige der anderen dieser Gruppen übertragen wird,
wobei eine Gruppe von Zweigen einen Leitungszweig (BL), der mit der Leitungsfaser (L) verbunden ist, und einen Pumpenzweig (BP) aufweist, der mit der Pumpeneinheit (EP) verbunden ist, wobei die andere Gruppe von Zweigen einen Empfangszweig (BR), der mit dem optischen Empfangsverstärker (RA) verbunden ist, und einen Sendezweig (BT) aufweist, der mit dem optischen Sendeverstärker (TA) verbunden ist.

5. Verbindungssystem nach Anspruch 3, dadurch gekennzeichnet, dass die Empfangsendeinrichtung (ER) ein Filtermittel (RF) aufweist, das zwischen dem optischen Empfangsverstärker (RA) und dem Empfänger (RX) angeschlossen ist und das verstärkte Empfangssignal selektiv zu diesem Empfänger überträgt.

6. Verbindungssystem nach Anspruch 3, dadurch gekennzeichnet, dass die Empfangsendeinrichtung (ER) außerdem einen optischen Isolator (RI) aufweist, der zwischen dem Pumpenverteilungselement (B) und dem optischen Empfangsverstärker (RA) angeschlossen ist, um zu verhindern, dass ein von diesem Verstärker verstärktes Licht zu diesem Koppler hin geht.

7. Verbindungssystem nach Anspruch 3, dadurch gekennzeichnet, dass die Sendeendeinrichtung (ET) außerdem ein Sendeisolationsmittel (TI) aufweist, das zwischen dem Sender (TX) und dem optischen Sendeverstärker (TA) angeschlossen ist, um zu verhindern, dass Lichtwellen den Sender erreichen.

8. Verbindungssystem nach Anspruch 3, dadurch gekennzeichnet, dass die Pumpeneinheit (EP) wenigstens eine Pumpe (PX) und ein Pumpenisolationsmittel (PI) aufweist, das zwischen dem Pumpenverteilungselement (B) und jeder Pumpe (PX) angeschlossen ist, um zu verhindern, das das verstärkte Sendesignal diese Pumpe erreicht.

9. System für eine bidirektionale optische Verbindung, das eine erste und eine zweite Station (S1, S2) aufweist, die durch eine Leitungsfaser (L) miteinander verbunden sind, um eine erste und eine zweite Trägerwelle zu übertragen, die Informationen tragen und sich in der Leitungsfaser in eine erste Richtung bzw. in eine zweite Richtung ausbreiten, die dieser ersten Richtung entgegengesetzt ist, wobei dieses Verbindungssystem außerdem wenigstens eine Verstärkungsvorrichtung (AL) in der Leitung aufweist, die zweichen einen ersten und einen zweiten aufeinanderfolgenden Abschnitt (L1 und L2) eingefügt ist, die zur Leitungsfaser (L) gehören und sich auf den Seiten der ersten bzw. zweiten Station (S1 und S2) befinden, wobei diese Vorrichtung aufweist:
- einen ersten und einen zweiten optischen Verstärker (FA1 und FA2), die fähig sind, eine erste und eine zweite Pumpwelle zu empfangen und dann die Wellen, wenigstens die erste bzw. zweite Trägerwelle, zu empfangen und zu verstärken, und
- eine Pumpeneinheit (PX1), um auf einem ersten und einem zweiten Pumpkanal (VP1 und VP2) ein Pumplicht bereitzustellen, das fähig ist die Pumpwellen zu bilden,
- dadurch gekennzeichnet, dass die Verstärkungsvorrichtung einen ersten und einen zweiten Verteiler (B1, B2) mit zwei Gruppen von zwei Zweigen mit Kopplung der Zweige jeder Gruppe von Zweigen jedes Verteilers an die Zweige der anderen Gruppe von Zweigen dieses Verteilers aufweist, wobei eine Gruppe von Zweigen jedes Verteilers aus einem Leitungszweig und einem Pumpenzweig besteht, wobei die andere Gruppe von Zweigen jedes Verteilers aus einem Empfangszweig und einem Sendezweig besteht, wobei die Leitungszweige (BL1 und BL2) dieser beiden Verteiler mit dem ersten und zweiten Leitungsabschnitt (L1 und L2) verbunden sind, wobei die Pumpenzweige (BP1 und BP2) dieser beiden Verteiler mit dem ersten und zweiten Pumpkanal (VP1 und VP2) verbunden sind, wobei die Empfangszweige (BR1 und BR2) dieser beiden Verteiler mit dem ersten und zweiten optischen Verstärker (FA1 und FA2) verbunden sind, wobei die Sendezweige (BT1 und BT2) dieser beiden Verteiler mit dem zweiten bzw. ersten optischen Verstärker (FA2 und FA1) verbunden sind.

10. Verbindungssystem nach Anspruch 9, dadurch gekennzeichnet, dass die Pumpeneinheit eine erste und eine zweite Pumpe (PX1 und PX2) aufweist, die mit einem ersten bzw. einem zweiten optischen Pumpenschutzisolator (PI1 und PI2) versehen sind und jeweils die beiden Pumpkanäle (VP1 und VP2) über denselben Pumpenmischkoppler (CP) versorgen, um diese Vorrichtung gegen den Ausfall einer dieser beiden Pumpen resistent zu machen.
